# EUROPEAN PATENT APPLICATION

(11) **EP 4 576 440 A1**
(43) Date of publication of application: **25.06.2025**
(21) Application number: 23307269.3
(22) Date of filing: 19.12.2023
(51) Int. Cl.: H01R 9/24, H02B 1/20

(54) **BUSBAR MODULE**

(71) Applicant: SCHNEIDER ELECTRIC INDUSTRIES SAS, 92500 Rueil-Malmaison (FR)
(72) Inventor: JESS, Ralf, 77955 Ettenheim (DE)
(74) Representative: Manitz Finsterwald Patent- und Rechtsanwaltspartnerschaft mbB

(57) **Abstract**

A bus bar module (100) for an electric device (200) including at least two contact elements (105) and an insulating element (114). Each contact element (105) includes a first terminal (106), a second terminal (107), and a third terminal 8108) electroconductively connected to each other. The first terminal (106) is configured for connecting the bus bar module (100) to a third bus bar module (140) and to receive a second terminal (147) of a contact element (145) of the third bus bar module (140). The second terminal (107) is configured for connecting the bus bar module (100) to a second bus bar module (120) and to be insertable into a first terminal (126) of a contact element (125) of the second bus bar module (120). The third terminal (108) is configured for connecting the bus bar module (100) to the electric device (200). The insulating element (114) includes at least two cavities (115), wherein each cavity is designed to accommodate one of the contact elements (105). The bus bar module (100) is configured to be plugged to the electric device (200).

## Description

### FIELD

The present disclosure relates to a bus bar module, methods for replacing an electric device in a block of devices, and an electric device.

### BACKGROUND

In industrial applications, bus bars are used primarily for reasons of simplicity and cost savings. Bus bars used in a block of devices or in control cabinets can replace a wiring of numerous electric devices or of a block of devices. This reduces the installation effort, which also reduces the possibility of installation errors.

Bus bars or bus bar systems are designed using a modular approach where, instead of standard cables connecting to individual electric devices, the electrical wires are mounted on an adapter or a bus bar module that is directly connected to the bus bar with live current.

However, in case of service of a respective electric device in a block of devices, for example if an electric device has to be removed or replaced, typically a plurality of screws has to be loosened and tightened again. A protection against contact of contact elements can be achieved with covers and end caps, but the protection is only guaranteed after the covers and/or end caps have been correctly installed.

Accordingly, there is a need to provide a bus bar module that enables an easy and safe possibility for replacing an electric device in a block of devices.

This demand is satisfied by a bus bar module, an electric device and methods for replacing an electric device in a block of devices as described herein.

### SUMMARY

The present disclosure provides a bus bar module, an electric device and methods for replacing an electric device in a block of devices according to the independent claims. Embodiments can be taken from the dependent claims, the description and the drawings.

In one aspect, the present disclosure is directed at a bus bar module for an electric device comprising at least two contact elements, wherein each of the at least two contact elements comprises a first terminal, a second terminal, and a third terminal electroconductive connected to each other. The first terminal is configured for connecting the bus bar module to a third bus bar module. The first terminal of the bus bar module is configured to receive a second terminal of a contact element of the third bus bar module. The second terminal is configured for connecting the bus bar module to a second bus bar module, the second terminal is configured to be insertable into a first terminal of a contact element of the second bus bar module, and the third terminal is configured for connecting the bus bar module to the electric device. The bus bar module further comprises an insulating element comprising at least two cavities, wherein each of the at least two cavities of the insulating element is designed to accommodate one of the at least two contact elements, wherein the bus bar module is configured to be plugged to the electric device.

According to an embodiment, the respective first terminal, the respective second terminal and the respective third terminal of each contact element may be arranged substantially in a plane. The first terminal and the third terminal may be connected to one another at a substantially 90-degree angle. The second terminal and the third terminal may be connected to one another at a substantially 90-degree angle.

According to an embodiment, the respective planes may be arranged parallel and at a distance from each other.

According to an embodiment, the respective first terminal of each contact element may comprise a plurality of first contact pins, in particular four first contact pins. The respective second terminal of each contact element may comprise at least one contact surface. The respective third terminal of each contact element may comprise at least one second contact pin, in particular two second contact pins.

According to an embodiment, each of the at least two cavities of the insulating element may comprise a first portion, a second portion and a third portion, wherein the first portion is configured to receive the first terminal of the contact element, the second portion is configured to receive the second terminal of the contact element, and the third portion is configured to receive the third terminal of the contact element.

According to an embodiment, the respective first portion of each cavity may be located at a first end of the insulating element, the respective second portion of each cavity may be located at a second end of the insulation element, and the respective third portion of each cavity may be located at a third end of the insulating element, wherein the first end and the second end may be oppositely arranged.

According to an embodiment, the insulating element may be designed as a comb at the first end of the insulating element and at the second end of the insulating element by means of the first portion of the at least two cavities and the second portion of the at least two cavities.

According to an embodiment, the bus bar module may comprise four contact elements and the insulating element may comprise four cavities, wherein two of the four contact elements may be configured to distribute high voltage power, in particular DC voltage power with at least 300V, preferably up to 1000V, and the other two of the four contact elements may be configured to distribute low voltage power, in particular 24V, preferably up to 120V.

According to an embodiment, the bus bar module may comprise a rotation axis preferably designed by means of a stud extruding from the insulating element, wherein the bus bar module may be configured to be rotatably connected to the electric device by means of the stud.

According to this embodiment, the rotation axis may be arranged in an area of the second terminals of the at least two contact elements and the rotation axis may be arranged perpendicular to the second terminals. The bus bar module may be configured to be rotatable about the rotation axis such that the respective first terminals of the at least two contact elements are disconnected to an adjacently arranged electric device if the bus bar module is rotated by substantially 90-degrees around the rotation axis, and the respective third terminals of the at least two contact elements are disconnected to the electric device if the bus bar module is rotated by substantially 90-degrees around the rotation axis.

According to an embodiment, the bus bar module may comprise at least one sliding rail extruding from the insulating element in a same direction as the third terminals of the at least two contact elements. The bus bar module may be configured to be slidably connected to the electric device in an axial direction from the first terminal to the second terminal of each of the at least two contact elements by means of the at least one sliding rail.

According to another aspect, the present disclosure is directed at a method for replacing an electric device in a block of devices using a bus bar module. The method comprises: unplugging a first bus bar module from a first electric device such that the first electric device is disconnected to a second electric device and a third electric device, wherein the first electric device is arranged in the middle between the second electric device and the third electric device; unplugging a second bus bar module from the second electric device; removing the first electric device from the block of devices; inserting a fourth electric device into the block of devices; plugging the second bus bar module in the second electric device; and plugging the first bus bar module in the fourth electric device, wherein the first bus bar module connects the fourth electric device to the second electric device and to the third electric device in the block of devices.

According to another aspect, the present disclosure is directed at a method for replacing an electric device in a block of devices using a bus bar module. The method comprises: rotating a second bus bar module of a second electric device such that the second electric device is disconnected from a first electric device, wherein the second electric device is adjacently arranged to the first electric device in the block of devices; rotating a first bus bar module of a first electric device such that the first electric device is disconnected from a third electric device, wherein the third electric device is adjacently arranged to the first electric device in the block of devices; removing the first electric device from the block of devices; inserting a fourth electric device comprising a fourth bus bar module into the block of devices; rotating the fourth bus bar module of the fourth electric device such that the fourth electric device is connected to the third electric device; and rotating the second bus bar module of the second electric device such that the second electric device is connected to the fourth electric device, wherein the fourth bus bar module connects the fourth electric device to the second electric device and to the third electric device in the block of devices.

According to another aspect, the present disclosure is directed at a method for replacing an electric device in a block of devices using a bus bar module. The method comprises: sliding a second bus bar module of a second electric device in an axial direction such that that the second electric device is disconnected from the first electric device, wherein the second electric device is adjacently arranged to the first electric device in the block of devices; sliding a first bus bar module of the first electric device in the axial direction such that such that the first electric device is disconnected from the third electric device, wherein the third electric device is adjacently arranged to the first electric device in the block of devices; removing the first electric device from the block of devices; inserting a fourth electric device comprising a fourth bus bar module into the block of devices; sliding the fourth bus bar module of the fourth electric device in an axial direction such the fourth electric device is connected to the third electric device; and sliding the second bus bar module of the second electric device in the axial direction such that the second electric device is connected to the fourth electric device, wherein the fourth bus bar module connects the fourth electric device to the second electric device and to the third electric device in the block of devices.

According to another aspect, the present disclosure is directed at an electric device comprising a bus bar module as disclosed herein.

According to another aspect, the present disclosure relates to a system comprising a plurality of bus bar modules which are electrically coupled, wherein at least some of the bus bar modules are electrically coupled with electric devices. The system preferably comprises a plurality of electric devices.

According to an embodiment, the electric device or one of the electric devices can be a motor driver, particularly a motor driver for a servo motor. It is also possible that one of the electric devices is a power supply, preferably an active power supply, wherein another electric device is a motor driver.

The bus bar modules are preferably adapted to conduct a current of up to 120A from one bus bar module to the next. Additionally, the bus bar modules can be adapted to conduct a current of up to 50A to a coupled electric device.

### DRAWINGS

Exemplary embodiments and functions of the present disclosure are described herein in conjunction with the following drawings showing:
- Fig. 1: a schematic perspective view of a plurality of electric devices in a block of devices according to an embodiment of the present disclosure;
- Fig. 2A: a schematic perspective view of one electric device with a bus bar module in an assembled state;
- Fig. 2B: a schematic exploded view of the electric device of Fig. 2A in an unassembled state;
- Fig. 3A - 3C: schematic perspective views of a bus bar module according to an embodiment of the present disclosure;
- Fig. 4: a schematic perspective view of three connected bus bar modules of Fig. 3C;
- Fig. 5: a schematic exploded view of the bus bar module of Fig. 3C;
- Fig. 6A: a schematic side view of the bus bar module of Fig. 3C;
- Fig. 6B: a schematic top view of the bus bar module of Fig. 3C;
- Fig. 6C: a schematic front view of the bus bar module of Fig. 3C;
- Fig. 7: a schematic perspective view of electric devices in a block of devices according to another embodiment of the present disclosure;
- Fig. 8: a schematic side view of a bus bar module according to the embodiment of Fig. 7;
- Fig. 9: a schematic perspective view of electric devices in a block of devices according to a further embodiment of the present disclosure;
- Fig. 10A: a schematic perspective view of a bus bar module according to the embodiment of Fig. 9;
- Fig. 10B: a schematic perspective view of an electric device according to the embodiment of Fig. 9;
- Fig. 11: a schematic perspective view of a bus bar module including a socket;
- Figs. 12A - 12G: schematic perspective views of process steps of a method for replacing an electric device in a block of devices;
- Figs. 13A - 13G: schematic perspective views of process steps of a further method for replacing an electric device in a block of devices;
- Figs. 14A - 14G: schematic perspective views of process steps of a further method for replacing an electric device in a block of devices;
- Fig. 15: a flow diagram illustrating a method for replacing an electric device in a block of devices according to an embodiment;
- Fig. 16: a flow diagram illustrating a further method for replacing an electric device in a block of devices according to a further embodiment; and
- Fig. 17: a flow diagram illustrating a further method for replacing an electric device in a block of devices according to a further embodiment.

### DETAILED DESCRIPTION

In the case of servo drive amplifiers, for example direct current (DC) servo drive amplifiers, a bus bar connection technology may be integrated in an electric device, in other words an electric drive unit, itself. Bus connections may be required for a power distribution, for example a DC link, and a control voltage supply, for example 24V. In addition, there may be further connections from an electric device to another electric device that have to be considered in an overall solution. The further connections may include Time Sensitive Networking (TSN) signals and/or Safe Torque Off (STO) signals. The TSN signal and/or the STO signal may be connected separately on a front side of an electric drive or a TSN and/or STO signal distribution may be integrated into a bus bar module.

The bus bar module may also be configured to distribute electrical grounding from one electric device to another electric device. Alternatively, the electrical grounding may be achieved using a Protective Earthing (PE) connection. The PE connection may be a screw contact configured to connect at least two electric devices.

The bus bar module may also be configured for connecting a next row via a cable with a plug, for example, a cable option for connecting the next row of electric devices in a block of devices. Usually, a plurality of electric devices, also may be called as drives, together in a row in the block of devices form a "first" block of devices. Another "second" block of devices could, for example, be in the next row in the block of devices, wherein the second block of devices may be arranged below the first block of devices. To connect the second block arranged in the next row, it may be possible to connect the second block of devices to the first block of devices, for example, from a "left" side and/or from a "right" side of the respective first and second block. There may be a connectivity possibility from a respective electric device arranged at one side of a block of devices in the first row to a respective electric device arranged at one side of a block of devices in the second row, for example, for power and signals. This connection may include single strands or a cable and at least one plug. The at least one plug may be designed as a corresponding mating connector for the bus bar module as described herein. Therefore, the plug may be configured to be plugged into the respective bus bar module of an electric device arranged at one end of the first device block. The connection to the second row of devices can then also be established using a further plug, which is plugged directly into the respective busbar module of an electric device arranged at one end of the second device block.

The stability of an entire servo amplifier block, for example, consisting of multiple electric devices in a row of a block of devices may be achieved with a separate screw connection or clamp connection. The screw connection or the clamp connection may be designed as a PE connection. Alternatively, the PE connection may be integrated in the bus bar module.

As describe above, the TSN signal and the STO signal may also be looped through from electric device to electric device. Therefore, TSN (1 Gbit Ethernet / 4x twisted pair) and STO signal connections may be on the front side of the electric device. However, a TSN signal connection and a STO signal connection may also be integrated into the bus bar module.

The bus bar module may also be configured for looping in and out via cable at any point of a network. Therefore, a cable outlet at the front of the electric device or at the bus bar module may be available. The installation height is limited. Therefore, the cable routing should be parallel to the front (right-angled connectors may be required).

The bus bar module may be assembled to an electric device tool-free. Also, a replacement of an electric device in a block of devices may be tool-free by using a bus bar module as described herein. This may also apply to the TSN and STO connection.

A plurality of electric drives or electric devices in a row of a block of devices form a block or a "first" block of electric devices. Another "second" block of electric devices may be arranged, for example, in a next row in the block of devices below the "first" block. An electric connection, for example a power connection and/or a signal connection, between the first block and the second block of electric devices. The electric connection may be made with single strands or a cable.

Further benefits of the bus bar module as described herein are as follows:
The bus bar module may enable a short installation time. Thus, the bus bar module may be more user-friendly since a quick installation of an electric device is possible, for example in a block of devices, and there is a possibility to quickly replace the electric device in case of service. Therefore, the bus bar module can be plugged in an electric device instead of using screw terminals.

Further, there may be no possibility of touching conductive parts. Touching life parts may be impossible when the bus bar module is mounted or installed to the electric device. But even if the bus bar module is only partially installed or not installed to an electric device, for example not plugged in the electric device, conductive parts of the bus bar module and conductive parts of the electric device may be protected from contact. For example, a bus bar module may be delivered without an electric device, and vice versa. Therefor, the conductive parts of the bus bar module and the electric device may be protected against contact.

Further, a protection against contact may also be present throughout the assembly of the bus bar module, for example plugging and unplugging the bus bar module to an electric device.

A further benefit of the bus bar module as described herein may be that no loose parts are needed, for example no end caps or similar are needed.

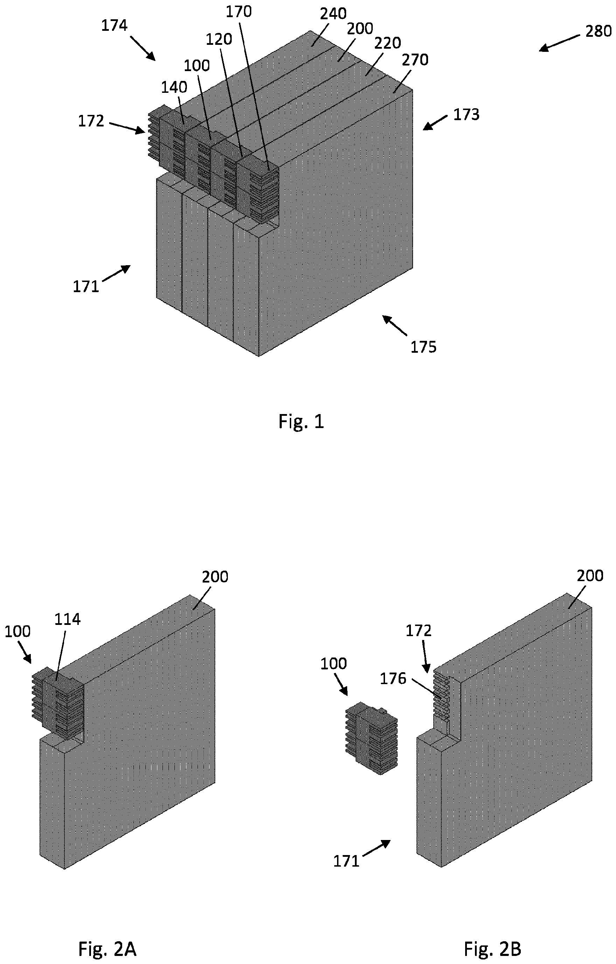

Fig. 1 shows a schematic perspective view of a plurality of electric devices 200, 220, 240, 270 in a block of devices 280 according to an embodiment of the present disclosure. The plurality of devices 200, 220, 240, 270 or the block of devices 280 may be arranged in a control cabinet (not shown in Fig. 1). The electric devices 200, 220, 240, 270 may be adjacently arranged to each other in the block of devices 280. In particular, the electric device 200, herein also called first electric device 200, may be arranged in the middle between a second electric device 220 and a third electric device 240. Therefore, the second electric device 220 may be adjacently arranged on a second side end 175 of the first electric device 200 and the third electric device 240 may be adjacently arranged on a first side end 174 of the first electric device 200. The second electric device 220 and the third electric device 240 may be arranged on opposite side ends 174, 175 of the first electric device 200.

Each of the electric devices 200, 220, 240, 270 may include a respective bus bar module 100, 120, 140, 170. The bus bar modules 100, 120, 140, 170 may be arranged at a front end 171 of the respective electric device 200, 220, 240, 270 and in an upper region 172 of the respective electric device 200, 220, 240, 270. It is to be understood that further additional electric devices may be arranged adjacently to the electric devices 200, 220, 240, 270 as shown in Fig. 1. Each bus bar module 100, 120, 140, 170 may include a DC-Bus (DC+/DC-) and a 24V supply voltage (24V/0V) in one bus bar module 100, 120, 140, 170 as will be described further below.

Figs. 2A shows a schematic perspective view of the first electric device 200 with a bus bar module 100 in an assembled state. The bus bar module 100 is connected to the electric device 200 in the assembled state by means of contact elements, as will be described below, encapsulated in an insulating element 114. In particular, the bus bar module 100 may be configured to be plugged in the electric device 200. Thus, the bus bar module 100 is plugged in the electric device 200 in the assembled state.

Fig. 2B shows a schematic exploded view of the electric device 100 of Fig. 2A in an unassembled state. The bus bar module 100 is disconnected to the electric device 200 in the unassembled state. In particular, the bus bar module 100 is unplugged in the electric device 200 in the assembled state. The electric device 200 may include receiving elements 176 on the front end 171 and in the upper region 172 of the electric device 200. The receiving elements 176 may be configured to receive the bus bar module 100.

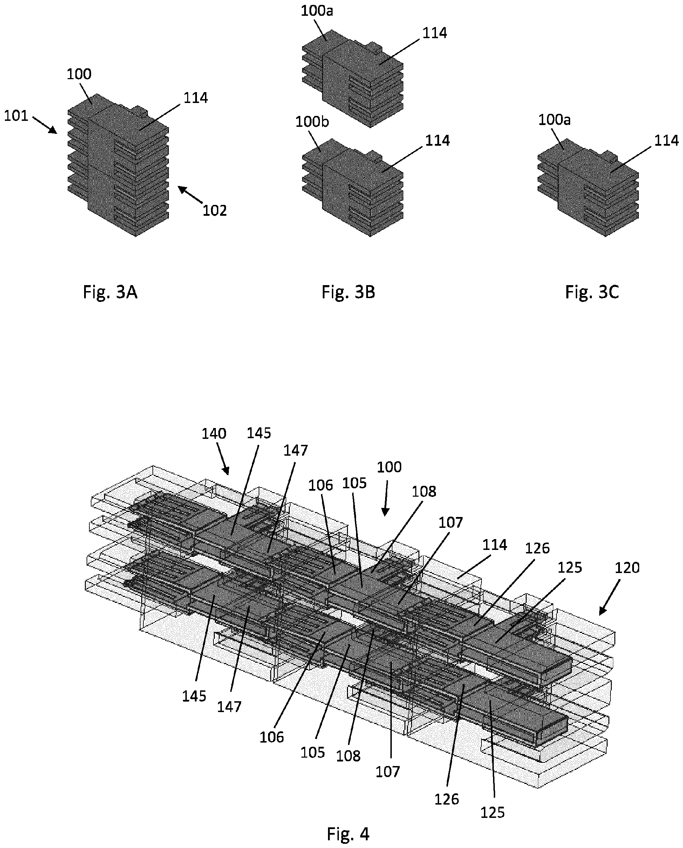

Figs. 3A to 3C show schematic perspective views of a bus bar module 100 according to an embodiment of the present disclosure. The bus bar module may be a two-part bus bar module 100, wherein a first portion 100a of the bus bar module 100 is arranged on top of a second portion 100b of the bus bar module 100. The first portion 100a and the second portion 100b of the bus bar module 100 may be constructed identically. However, the first portion 100a and the second portion 100b of the bus bar module 100 may also show differences, for example regarding a dimensioning of contact elements (see Fig. 4) inside the insulating element 114.

Fig. 4 shows a schematic perspective view of three connected bus bar modules 100 of Fig. 3C. Each bus bar module 100 includes two contact elements 105 and an insulating element 114. The insulation elements 114 are shown transparently in Fig 4 in order to recognize an arrangement of the two contact elements 105 inside the insulating element 114. Each of the two contact elements 105 includes a first terminal 106, a second terminal 107, and a third terminal 108. The first terminal 106, the second terminal 107 and the third terminal 108 are electroconductive connected to each other. The first terminal 106 and the second terminal 107 are configured for connecting the bus bar module 100 to a another bus bar module 120, 140. The third terminal 108 is configured for connecting the bus bar module 100 to the electric device 200 (see Fig. 1).

Further, the first terminal 106 is configured to receive a second terminal 147 of a contact element 145 of a third bus bar module 140, the second terminal 107 is configured to be insertable into a first terminal 126 of a contact element 125 of a second bus bar module 120.

The bus bar module 100 may be designed as a plug-in solution with contact elements 105, also called connectors. The bus bar module 100 as described herein may include at least one contact element 105 for transmitting DC voltage, also called a DC bus, and at least one contact element 105 for a 24V supply from one electric device 100 to another electric device 120. The bus bar module 100, may include a DC-Bus wherein one of the two contact elements 105 may be configured to transmit DC+ voltage power and the other contact element 105 may be configured to transmit DC- voltage power from the third bus bar module 140 over the first bus bar module 100 to the second bus bar module 120, or vice versa. Alternatively, the bus bar module 100, may include a 24V supply voltage bus wherein one of the two contact elements 105 may be configured to transmit 24V voltage power and the other contact element 105 may be configured to transmit 0V voltage power, i.e. being configured as a neutral line, from the third bus bar module 140 over the first bus bar module 100 to the second bus bar module 120, or vice versa.

The two contact elements 105 for DC voltage and the two contact elements 105 for 24V supply may be combined in one mechanical unit (see Fig. 3A). The mechanical unit may be designed as an insulating element 114 as described herein.

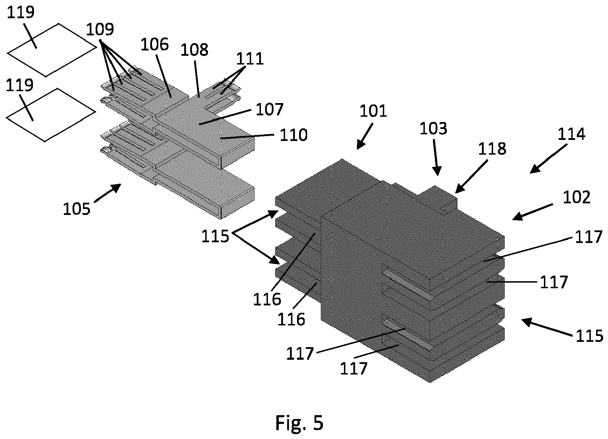

Fig. 5 shows a schematic exploded perspective view of the bus bar module 100 of Fig. 3C. The insulating element 114 includes two cavities 115. Each of the two cavities 115 is configured to receive and accommodate one of the two contact elements 105. Each of the two cavities 115 of the insulating element 114 includes a first portion 116, a second portion 117 and a third portion 118, wherein the first portion 116 is configured to receive the first terminal 106 of the contact element 105, the second portion 117 is configured to receive the second terminal 107 of the contact element 105, and the third portion 118 is configured to receive the third terminal 108 of the contact element 105.

The respective first portion 116 of each cavity 115 is located at a first end 101 of the insulating element 114. The respective second portion 117 of each cavity 115 is located at a second end 102 of the insulation element 114. The respective third portion 118 of each cavity 115 is located at a third end 103 of the insulating element 114. The first end 101 and the second end 102 are oppositely arranged.

The insulating element 114 is designed as a comb at the first end 101 of the insulating element 114 and at the second end 102 of the insulating element 114 by means of the first portion 116 of the two cavities 115 and the second portion 117 of the two cavities 115.

The first terminal 106, the second terminal 107 and the third terminal 108 of the contact element 105 are arranged substantially in a plane 119. Fig. 5 shows two parallel arranged contact elements 105, wherein each of the two contact elements 105 may be arranged substantially in a respective plane 119. Accordingly, the first portion 116, the second portion 117 and the third portion 118 may also be arranged in the plane 119 of the respective contact element 105. The planes 119 are arranged parallel and at a distance to each other.

The first terminal 106 of each contact element 105 includes a plurality of first contact pins 109, in particular four first contact pins 109 as shown in Fig. 5. The contact pins 109 may be standard contact pins 109. The second terminal 107 of each contact element 105 includes at least one contact surface 110. The third terminal 108 of each contact element 104 includes at least one second contact pin 111, in particular two second contact pins 111 as shown in Fig. 5.

The contact surface 110 can be shaped or designed in such a way that busbar modules 100, 120, 140, 170 (see Figs. 1, 7, 9) arranged next to each other can be pushed together and the first terminal 106 of a respective busbar module 100, 120, 140, 170 may still be in contact with a second terminal 107 of another busbar module 100, 120, 140, 170. This may allow the bus bar modules 100, 120, 140, 170 to be pushed further into one another, for example, up to a second latching position, after full contact with a counterpart in a first latching position has been reached. This may be particularly useful on a left-hand side of an entire block of electric devices 280 (see Figs. 1, 7, 9) consisting of a plurality of electric devices 200, 220, 240, 270 or drives because nothing of the bus bar module 140 may protrude beyond a housing of the respective electric device 240.

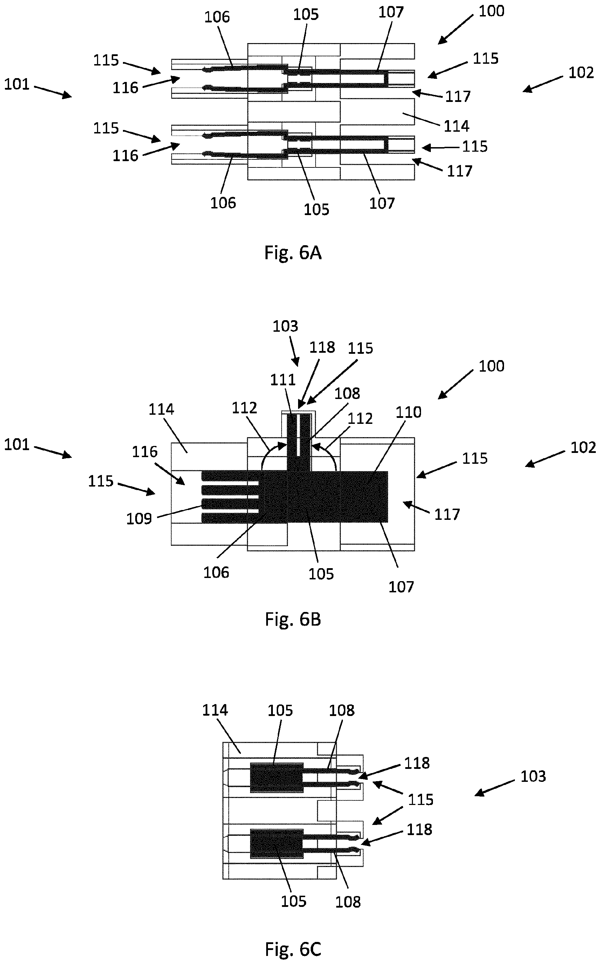

Fig. 6A shows a schematic side view of the bus bar module 100 of Fig. 3C. The two contact elements 105 are arranged inside the two cavities 115 of the insulating element 114. Each of the two cavities 115 of the insulating element 114 may extend from a first end 101 of the insulating element 114 to the second end 102 of the insulating element 114. The first terminal 106 of the contact element 105 is located in a first portion 116 of the respective cavity 115. The second terminal 107 of the contact element 105 is located in a second portion 117 of the respective cavity 115.

The contact element 105 may be designed in U-shape, wherein the first terminal 106 of the contact element may define an opening of the U-shape and the second terminal 107 may define a bottom of the U-shape.

Fig. 6B shows a schematic top view of the bus bar module 100 of Fig. 3C. The first terminal 106 and the third terminal 108 are connected to one another at a substantially 90-degree angle 112. The second terminal 107 and the third terminal 108 are connected to one another at a substantially 90-degree angle 112. The first terminal 106, in particular contact pins 109 of the first terminal 106 are arranged in the first portion 116 of the cavity 115. The second terminal 107, in particular the contact surface 110 of the second terminal 107 is arranged in the second portion 117 of the cavity 115. The third terminal 108, in particular the contact pins 111 of the third terminal 108 are arranged in the third portion 118 of the cavity 115 (see also Fig. 6C). A width of the contact surface 110 of the second terminal 107 may be configured to be able to transmit high energy, for example up to 1 000V and up to 150A. A total width of the first terminal 106, i.e. a width of all contact pins 109 a respective spacing between the contact pins 109 of the first terminal 106 may be the same as the width of the contact surface 110 of the second terminal 107. A total width of the third terminal 108, i.e. a width of all contact pins 111 of the third terminal 108 a respective spacing between the contact pins 111 may be less than the total width of the first terminal 106 or the second terminal 107. The total width of the third terminal 108 may be configured to be able to transmit less energy than the first terminal 106 or the second terminal 107.

Fig. 6C shows a schematic front view of the bus bar module 100 of Fig. 3C. The third terminal 108 of the contact element 105 is located in a third portion 118 of the respective cavity 115 at a third end 103 of the insulating element 114.

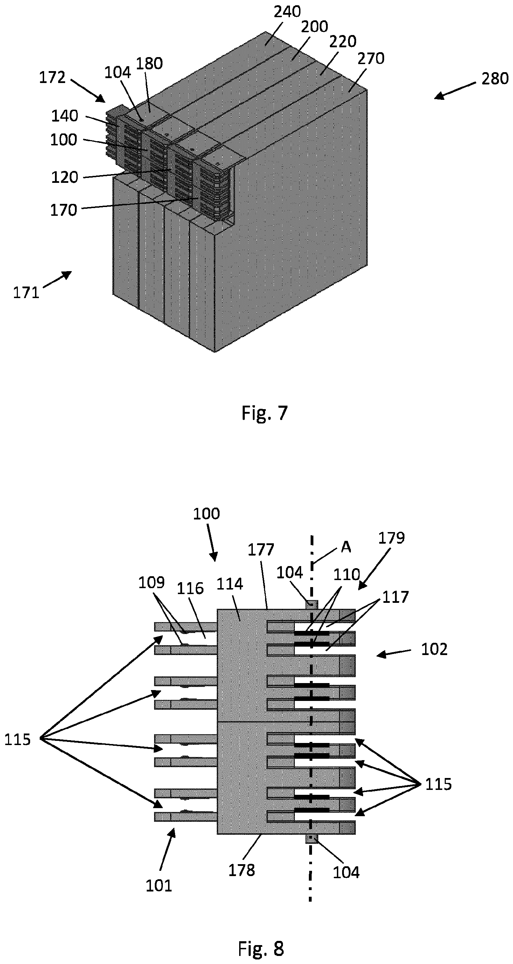

Fig. 7 shows a perspective view of electric devices 200, 220, 240, 270 in a block of devices 280 according to another embodiment of the present disclosure. Each of the electric devices 200, 220, 240, 270 may include a respective bus bar module 100, 120, 140, 170. The bus bar modules 100, 120, 140, 170 may be arranged at a front end 171 of the respective electric device 200, 220, 240, 270 and in an upper region 172 of the respective electric device 200, 220, 240, 270. The electric devices 200, 220, 240, 270 may be adjacently arranged to each other in the block of devices 280. In particular, the electric device 200, herein also called first electric device 200, may be arranged in the middle between a second electric device 220 and a third electric device 240. Therefore, the second electric device 220 may be adjacently arranged on one side of the first electric device 200 and the third electric device 240 may be adjacently arranged on another side of the first electric device 200, wherein the second electric device 220 and the third electric device 240 may be arranged on opposite sides of the first electric device 200.

The bus bar module 100, 120, 140, 170 of a respective electric device 200, 220, 240, 270 is configured to be rotatably connected to the electric device 200, 220, 240, 270 by means of a stud 104. The bus bar module 100, 120, 140, 170 is rotatably connected to the respective electric device 200, 220, 240, 270 using a mounting plate 180 located at the respective electric device 200, 220, 240, 270.

The mounting plate 180 may be located at the upper end 172 of the respective electric device 200, 220, 240, 270. The mounting plate 180 may include a hole where the stud 104 is received if the bus bar module 100, 120, 140, 170 is installed or plugged to the respective device 200, 220, 240, 270.

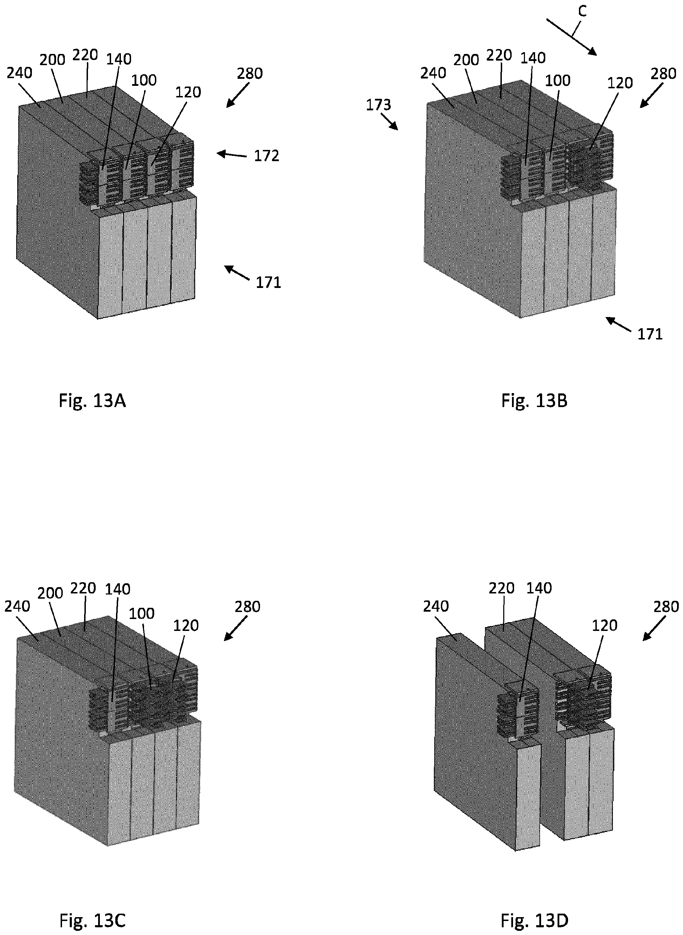

The first bus bar module 100 is configured to be rotatable about the rotation axis A such that the respective first terminals 106 (see Fig. 6B) of the contact elements 105 (see Fig. 6B) are disconnected to an adjacently arranged third electric device (240), and the respective third terminals 108 (see. Fig. 6B) of the contact elements 105 (see Fig. 6B) are disconnected to the electric device 200 if the bus bar module 100 is rotated by substantially 90-degrees around the rotation axis A (see also Fig. 13B).

Fig. 8 shows a schematic side view of a bus bar module 100 according to the embodiment of Fig. 7. The insulating element 114 of the bus bar element 100 includes four cavities 115. The bus bar module 100 includes four contact elements (see Fig. 4) with first contact pins 109 at the first terminals of the contact element, wherein the first contact pins 109 are located inside a respective cavity 115 at a first portion 116 of the cavity 115. The contact element also includes contact surfaces 110 at the second terminal of the contact element, wherein the contact surfaces 110 are located inside the respective cavity 115 at the second portion 117 of the cavity 115. Two of the four contact elements are configured to distribute high voltage power, in particular DC voltage power with at least 300V, preferably up to 1000V, and the other two of the four contact elements are configured to distribute low voltage power, in particular 24V, preferably up to 120V.

The rotation axis A is arranged in an area 179 of the second terminals, in particular in an area 179 of the contact surfaces 110 of the contact element such that the rotation axis A intersects the contact surfaces 110 perpendicular.

Therefore, the rotation axis A is arranged perpendicular to the second terminals or the second surfaces 110.

The rotation axis A is designed by means of at least one stud 104. The at least one stud 104 extrudes from the insulating element 114 in a direction perpendicular to the contact surfaces 110 of the contact element. In particular, the bus bar module 100 may include two studs 104. A first stud 104 may extrude from a top surface 177 of the insulating element 114. A second stud 104 may extrude from a bottom surface 178 of the insulating element.

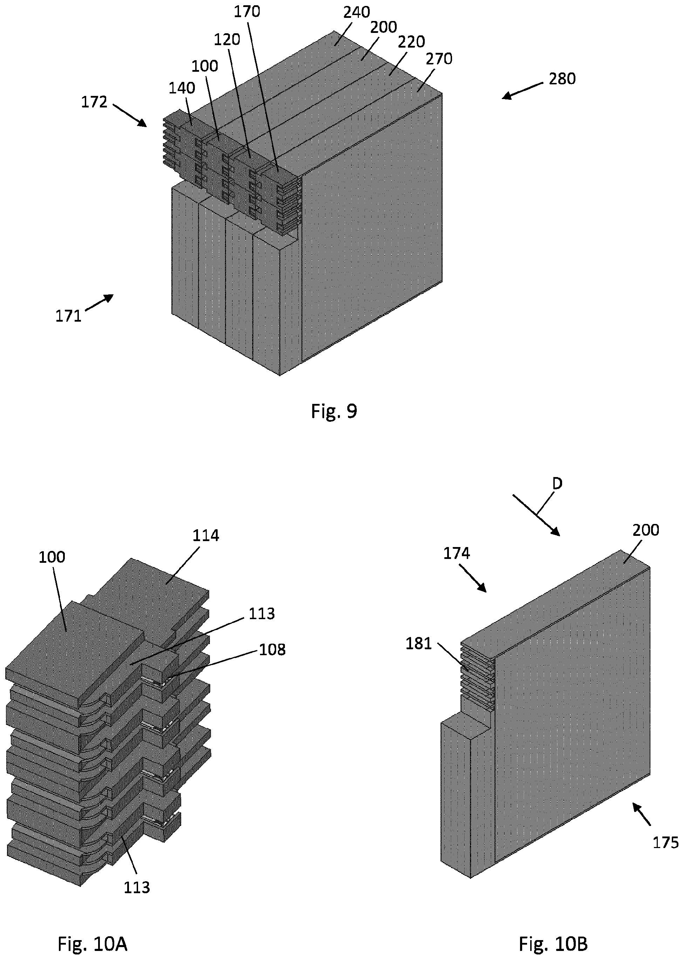

Fig. 9 shows a schematic perspective view of electric devices 200, 220, 240, 270 in a block of devices 280 according to a further embodiment of the present disclosure. The plurality of devices 200, 220, 240, 270 or the block of devices 280 may be arranged in a control cabinet (not shown in Fig. 9). Each of the electric devices 200, 220, 240, 270 may include a respective bus bar module 100, 120, 140, 170. The bus bar modules 100, 120, 140, 170 may be arranged at a front end 171 of the respective electric device 200, 220, 240, 270 and in an upper region 172 of the respective electric device 200, 220, 240, 270. The electric devices 200, 220, 240, 270 may be adjacently arranged to each other in the block of devices 280. In particular, the electric device 200, herein also called first electric device 200, may be arranged in the middle between a second electric device 220 and a third electric device 240. Therefore, the second electric device 220 may be adjacently arranged on one side of the first electric device 200 and the third electric device 240 may be adjacently arranged on another side of the first electric device 200, wherein the second electric device 220 and the third electric device 240 may be arranged on opposite sides of the first electric device 200.

Figs. 10A shows a schematic perspective view of a bus bar module 100 and Fig. 10B shows a perspective view of an electric device 200 according to the embodiment of Fig. 9. The bus bar module 100 of a respective electric device 200 is configured to be slidable connected to the electric device 200 by means of at least one sliding rail 113 (Fig. 10A). The sliding rail 113 of the bus bar module 100 may extrude from the insulating element 114 in a same direction as the third terminals 108 of the at least two contact elements 105 (see Fig. 6B).

The bus bar module 100 is shiftably connected to the respective electric device 200 using at least one corresponding sliding rail 181 located at the respective electric device 200. The corresponding sliding rail 181 may be configured to receive the sliding rail 113 of the bus bar module 100 if the bus bar module 100 is installed or plugged to the respective device 200 (Fig. 10B).

The bus bar module 100 of the electric device 200 may be shifted in an axial direction D, wherein the axial direction D may be directed from a first side end 174 of the electric device 200 to a second side end 175 of the electric device 200. In other words, the bus bar module 100 is configured to be slidably connected to the electric device 200 in the axial direction D from the first terminal 106 to the second terminal 107 of each of the at least two contact elements 105 by means of the at least one sliding rail 113 (see Fig. 10A).

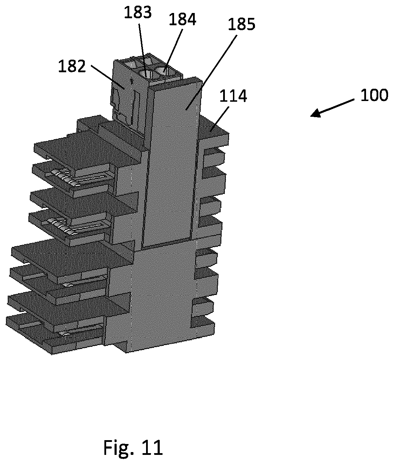

Fig. 11 shows a schematic perspective view of a bus bar module 100 including a socket 182. The bus bar module may be configured to receive the socket 182. The socket 182 may be designed as a 24V feed-in module. The socket 182 may be plugged directly into the bus bar module 100 so that no extra connector has to be provided on the electric device 200. The socket may include two ports 183, 184 for connecting a respective wire for a 24V and a 0V connection. The socket 182 may additionally fixed to the insulating element 114 using a fixation plate 185. The fixation plate 185 may stabilize the plugged-in socket 182 to the insulating element 114.

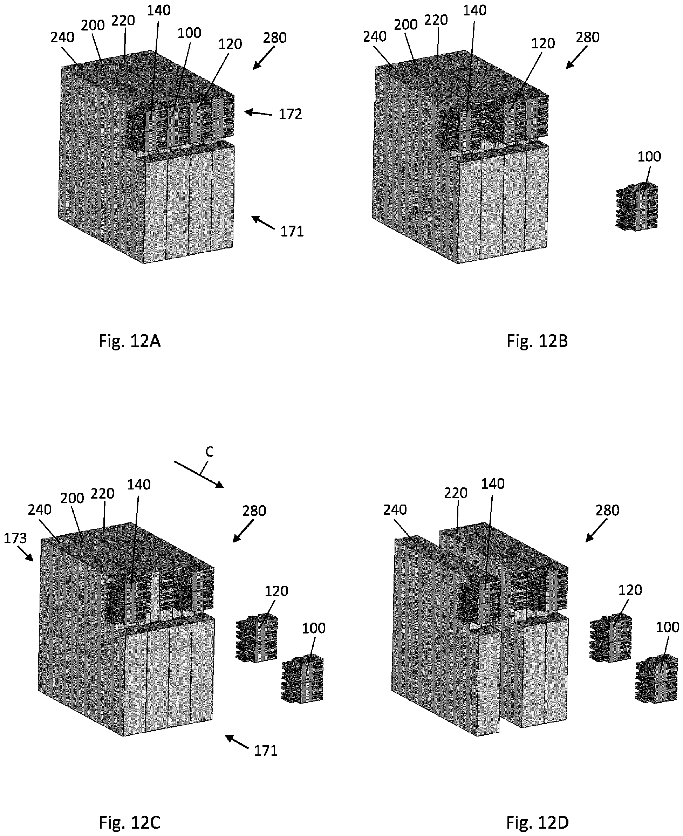

Fig. 12A shows a schematic perspective view of electric devices 200, 220, 240 in a block of devices 280 according to the embodiment of Fig. 1. The plurality of devices 200, 220, 240 or the block of devices 280 may be arranged in a control cabinet (not shown in Fig. 12A). Each of the electric devices 200, 220, 240 may include a respective bus bar module 100, 120, 140. The bus bar modules 100, 120, 140 may be arranged at a front end 171 of the respective electric device 200, 220, 240 and in an upper region 172 of the respective electric device 200, 220, 240. The electric devices 200, 220, 240 may be adjacently arranged to each other in the block of devices 280. In particular, the electric device 200, herein also called first electric device 200, may be arranged in the middle between a second electric device 220 and a third electric device 240. Therefore, the second electric device 220 may be adjacently arranged on one side of the first electric device 200 and the third electric device 240 may be adjacently arranged on another side of the first electric device 200, wherein the second electric device 220 and the third electric device 240 may be arranged on opposite sides of the first electric device 200. If the first electric device 200 is to be replaced in the block of devices 280 of Fig. 12A, the following steps shown in Figs. 12B to 12G may have to be carried out.

Figs. 12B to 12G show schematic views of results of process steps of a method 300 for replacing an electric device 200 in the block of devices 280 in a perspective view.

First, as shown in Fig. 12B, the first bus bar module 100 of the first electric device 200 may have to be unplugged from the first electric device 200. Therefore, the first electric device 200 may be disconnected to the adjacently arranged second electric device 220 and the third electric device 240.

In a next step shown in Fig. 12C, the second bus bar module 120 of the second electric device 220 may have to be unplugged from the second electric device 220. This step may provide that there is enough space to remove the first electric device 200 in an axial direction C out of the block of devices 280. The axial direction C may be directed from a back end 173 of the first electric device 200 to the front end 171 of the first electric device 200. Fig. 12D shows a result of removing the first electric device 200 from the block of devices 280.

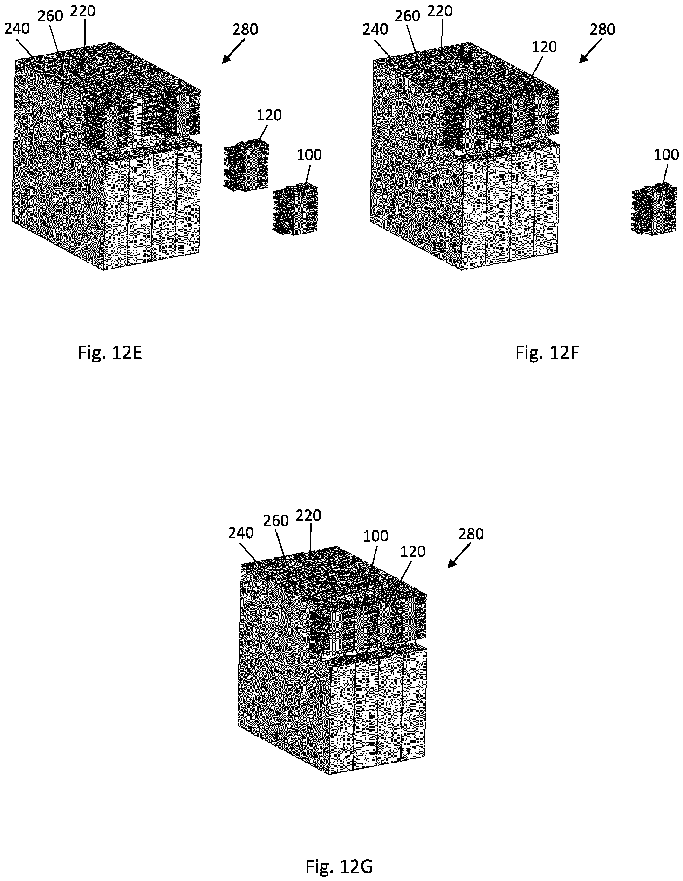

After removing the first electric device 200 from the block of devices 280, a fourth electric device 260 may be inserted into the block of devices 280, see Fig. 12E. The fourth electric device 260 may be different from the first electric device 200. The fourth electric device 260 may be inserted at a same position as the first electric device 200 into the block of devices 280. Therefore, the fourth electric device 260 may be arranged in the middle between the second electric device 220 and the third electric device 240.

Figs. 12F and 12G show schematic views of results of connecting the fourth electric device 260 to the second electric device 220 and the third electric device 240, the fourth electric device 260 having replaced the first electric device 200 in the block of devices 280. To connect the fourth electric device 260 to the second electric device 220 and to the third electric device 240, the second bus bar module 120 may be plugged in the second electric device 220, see Fig. 12F.

Finally, the first bus bar module 100 may be plugged in the fourth electric device 260 to connect the fourth electric device 260 to the second electric device 220 and the third electric device 240 by means of the first bus bar module 100. It is to be understood that also a new bus bar module can be used instead of the first bus bar module 100 of the first electric device 200 to connect the fourth electric device 260 to the second electric device 220 and the third electric device 240. The same applies for each bus bar module. Thus, the first electric device 200 has been replaced by the fourth electric device 260 in the block of devices 280. The first bus bar module 100 connects the fourth electric device 260 to the second electric device 220 and the third electric device 240 in the block of devices 280, see Fig. 12G.

Fig. 13A shows a schematic perspective view of electric devices 200, 220, 240 in a block of devices 280 according to the embodiment of Fig. 7. The plurality of devices 200, 220, 240 or the block of devices 280 may be arranged in a control cabinet (not shown in Fig. 13A). Each of the electric devices 200, 220, 240 may include a respective bus bar module 100, 120, 140. The bus bar modules 100, 120, 140 may be arranged at a front end 171 of the respective electric device 200, 220, 240 and in an upper region 172 of the respective electric device 200, 220, 240. The electric devices 200, 220, 240 may be adjacently arranged to each other in the block of devices 280. In particular, the electric device 200, herein also called first electric device 200, may be arranged in the middle between a second electric device 220 and a third electric device 240. Therefore, the second electric device 220 may be adjacently arranged on one side of the first electric device 200 and the third electric device 240 may be adjacently arranged on another side of the first electric device 200, wherein the second electric device 220 and the third electric device 240 may be arranged on opposite sides of the first electric device 200. If the first electric device 200 is to be replaced in the block of devices 280 of Fig. 13A, the following steps shown in Figs. 13B to 13G may have to be carried out.

Figs. 13B to 13G show schematic views of results of process steps of a method 400 for replacing an electric device 200 in the block of devices 280 in a perspective view.

First, as shown in Fig. 13B, a second bus bar module 120 of the second electric device 220 may have to be rotated, in particular counterclockwise about a rotation axis A (see Fig. 8) by an angle of substantially 90-degrees. Therefore, the second electric device 220 may be disconnected to the adjacently arranged first electric device 200. In particular, first terminals of respective contact elements of the second bus bar module 120 may be disconnected to second terminals of respective contact elements of the first bus bar module 100 of the first electric device 200. In addition to the effect of disconnecting the second electric device 220 from the first electric device 200, this step may provide that there is enough space to remove the first electric device 200 in an axial direction C out of the block of devices 280. The axial direction C may be directed from a back end 173 of the first electric device 200 to the front end 171 of the first electric device 200.

In a next step shown in Fig. 13C, the first bus bar module 100 of the first electric device 200 may have to be rotated, in particular counterclockwise about a rotation axis A (see Fig. 8) by an angle of substantially 90-degrees. Therefore, the first electric device 200 may be disconnected to the adjacently arranged third electric device 240. In particular, first terminals of respective contact elements of the first bus bar module 100 may be disconnected to second terminals of respective contact elements of the third bus bar module 140 of the third electric device 240.

Fig. 13D shows a schematic view of a result of removing the first electric device 200 from the block of devices 280.

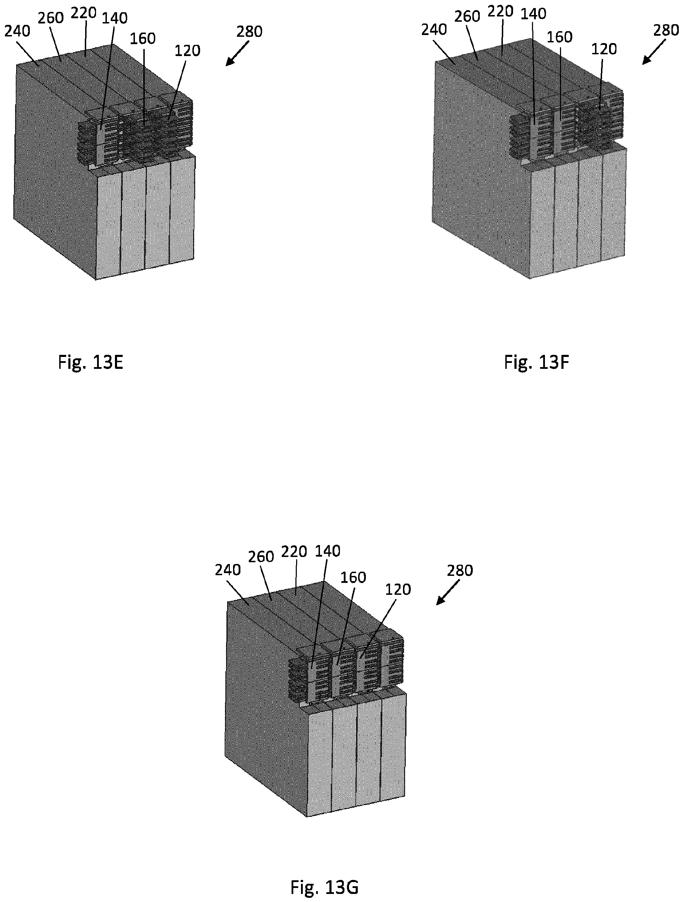

After removing the first electric device 200 from the block of devices 280, a fourth electric device 260 including a fourth bus bar module 160 may be inserted into the block of devices 280, see Fig. 13E. The fourth electric device 260 may be different from the first electric device 200. The fourth electric device 260 may be inserted at a same position as the first electric device 200 into the block of devices 280. Therefore, the fourth electric device 260 may be arranged in the middle between the second electric device 220 and the third electric device 240.

Figs. 13F and 13G show schematic views of results of connecting the fourth electric device 260 to the second electric device 220 and the third electric device 240, the fourth electric device 260 having replaced the first electric device 200 in the block of devices 280.

To connect the fourth electric device 260 to the third electric device 240, the fourth bus bar module 160 may have to be rotated, in particular clockwise about the rotation axis A (see Fig. 8) by an angle of substantially 90-degrees. Therefore, the fourth electric device 260 may be connected to the adjacently arranged third electric device 240. In particular, the first terminals of the respective contact elements of the fourth bus bar module 160 may be connected to the second terminals of the respective contact elements of the third bus bar module 140 of the third electric device 240, see Fig. 13F. It is to be understood that also the bus bar module 100 of the first electric device 200 can be used instead of the fourth bus bar module 160 of the fourth electric device 260 to connect the fourth electric device 260 to the second electric device 220 and the third electric device 240. For this purpose, the bus bar module 100 may be removed or unplugged from the first electric device 200 and plugged to the fourth electric device 260 before rotating the bus bar module. The same applies for each bus bar module.

To connect the fourth electric device 260 to the second electric device 220, the second bus bar module 120 may be rotated, in particular clockwise about the rotation axis A (see Fig. 8) by an angle of substantially 90-degrees. Therefore, the second electric device 220 may be connected to the adjacently arranged fourth electric device 260. In particular, first terminals of the respective contact elements of the second bus bar module 120 may be connected to second terminals of respective contact elements of the fourth bus bar module 160 of the fourth electric device 260, see Fig. 13G.

Thus, the first electric device 200 has been replaced by the fourth electric device 260 in the block of devices 280, see Fig. 13G. The fourth electric device 260 may be connected to the second electric device 220 and the third electric device 240 by means of the fourth bus bar module 160.

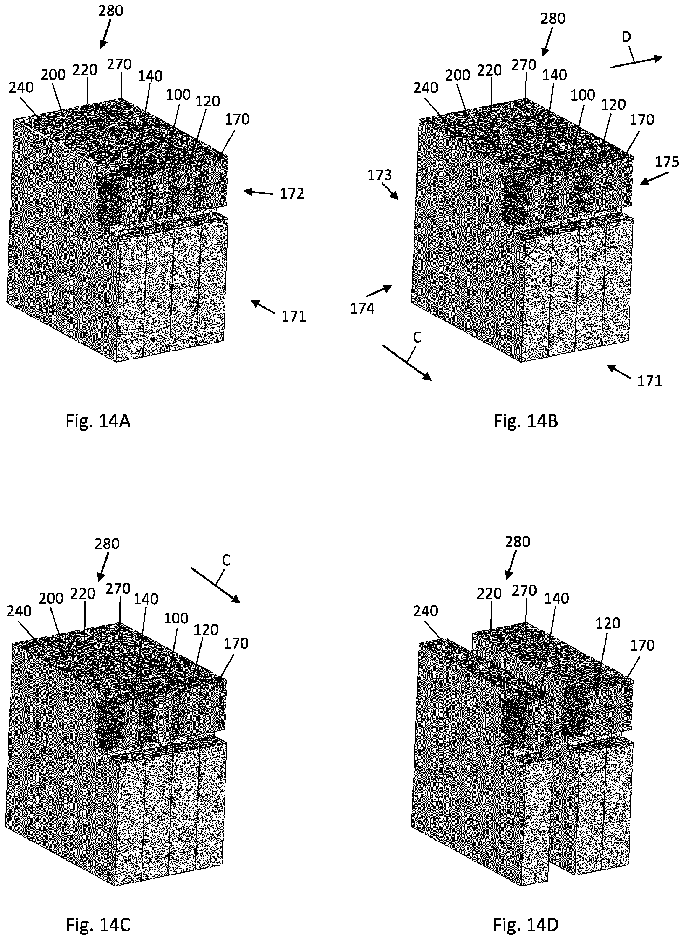

Fig. 14A shows a schematic perspective view of electric devices 200, 220, 240; 270 in a block of devices 280 according to the embodiment of Fig. 10. The plurality of devices 200, 220, 240, 270 or the block of devices 280 may be arranged in a control cabinet (not shown in Fig. 14A). Each of the electric devices 200, 220, 240, 270 may include a respective bus bar module 100, 120, 140, 170. The bus bar modules 100, 120, 140, 170 may be arranged at a front end 171 of the respective electric device 200, 220, 240, 270 and in an upper region 172 of the respective electric device 200, 220, 240, 270. The electric devices 200, 220, 240, 270 may be adjacently arranged to each other in the block of devices 280. In particular, the electric device 200, herein also called first electric device 200, may be arranged in the middle between a second electric device 220 and a third electric device 240. Therefore, the second electric device 220 may be adjacently arranged on one side of the first electric device 200 and the third electric device 240 may be adjacently arranged on another side of the first electric device 200, wherein the second electric device 220 and the third electric device 240 may be arranged on opposite sides of the first electric device 200. If the first electric device 200 is to be replaced in the block of devices 280 of Fig. 14A, the following steps shown in Figs. 14B to 14G may have to be carried out.

Figs. 14B to 14G show schematic views of results of process steps of a method 500 for replacing an electric device 200 in the block of devices 280 in a perspective view.

First, as shown in Fig. 14B, the second bus bar module 120 of the second electric device 220 may have to be slid or shifted in an axial direction D such that the second electric device 220 may be disconnected from the adjacently arranged first electric device 200. In particular, first terminals of respective contact elements of the second bus bar module 120 of the second electric device 220 may be disconnected to second terminals of respective contact elements of the first bus bar module 100 of the first electric device 200. The axial direction D may be directed from a first side end 174 of an electric device 200; 220, 240, 270 to a second side end 175 of an electric device 200, 220, 240, 270. In addition to the effect of disconnecting the second electric device 220 from the first electric device 200, this step may provide that there is enough space to remove the first electric device 200 in an axial direction C out of the block of devices 280, once the first electric device 200 has been disconnected to the third electric device 240. The axial direction C may be directed from a back end 173 of the first electric device 200 to the front end 171 of the first electric device 200.

In some embodiments it may be necessary that the second bus bar module 120 of the second electric device 220 may have to be slid or shifted further in the axial direction D together with a fifth bus bar module 170 of a fifth electric device 270 in order to have enough space to remove the first electric device 200 in an axial direction C out of the block of devices 280. The fifth electric device 270 may be adjacently arranged to the second electric device 220.

In a next step shown in Fig. 14C, the first bus bar module 100 of the first electric device 200 may have to be slid or shifted in the axial direction D such that the first electric device 200 may be disconnected from the adjacently arranged third electric device 240. In particular, first terminals of the respective contact elements of the first bus bar module 100 of the first electric device 200 may be disconnected from second terminals of respective contact elements of the third bus bar module 140 of the third electric device 240. Fig. 14D shows a result of removing the first electric device 200 from the block of devices 280.

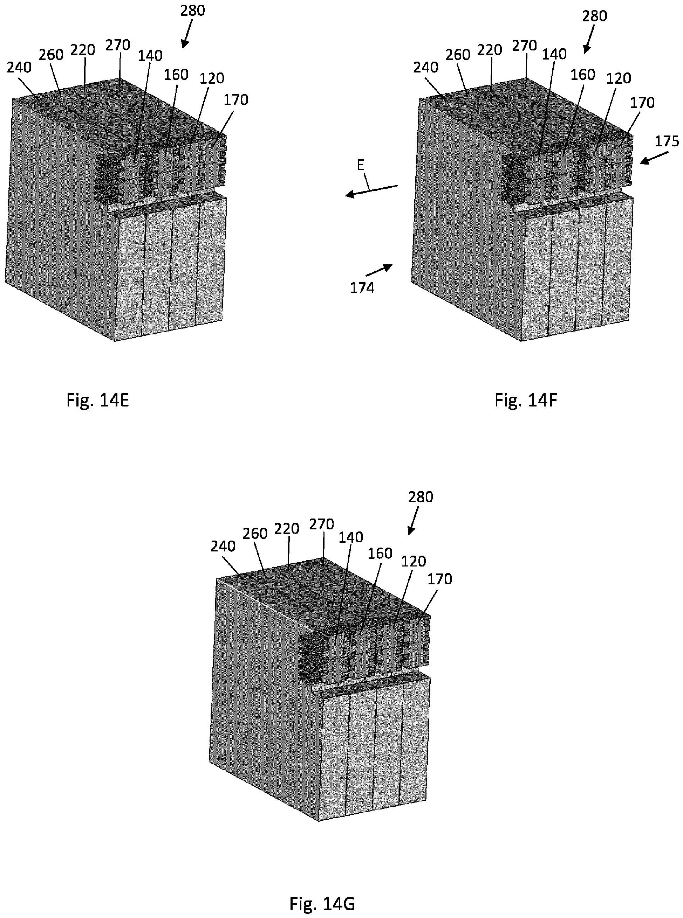

After removing the first electric device 200 from the block of devices 280, a fourth electric device 260 including a fourth bus bar module 160 may be inserted into the block of devices 280, see Fig. 14E. The fourth electric device 260 may be different from the first electric device 200. The fourth electric device 260 may be inserted at a same position as the first electric device 200 into the block of devices 280. Therefore, the fourth electric device 260 may be arranged in the middle between the second electric device 220 and the third electric device 240.

Figs. 14F and 14G show schematic views of results of connecting the fourth electric device 260 to the second electric device 220 and the third electric device 240, the fourth electric device 260 having replaced the first electric device 200 in the block of devices 280.

To connect the fourth electric device 260 to the third electric device 240, the fourth bus bar module 160 of the fourth electric device 260 may have to be slid or shifted in the axial direction E such that the fourth electric device 260 may be connected to the adjacently arranged third electric device 240. In particular, first terminals of respective contact elements of the fourth bus bar module 160 of the fourth electric device 260 may be connected to second terminals of the respective contact elements of the third bus bar module 140 of the third electric device 240, see Fig. 14F. The axial direction E may be directed from the second side end 175 of an electric device 200; 220, 240, 270 to the first side end 174 of an electric device 200, 220, 240, 270. It is to be understood that also the bus bar module 100 of the first electric device 200 can be used instead of the fourth bus bar module 160 of the fourth electric device 260 to connect the fourth electric device 260 to the third electric device 240. For this purpose, the bus bar module 100 may be removed or unplugged from the first electric device 200 and plugged to the fourth electric device 260 before sliding the bus bar module in the axial direction E. The same applies for each bus bar module.

Finally, the second bus bar module 120 of the second electric device 220 may have to be slid or shifted in the axial direction E such that the second electric device 220 may be connected to the adjacently arranged fourth electric device 260. In particular, the first terminals of the respective contact elements of the second bus bar module 120 of the second electric device 220 may be connected to second terminals of the respective contact elements of the fourth bus bar module 160 of the fourth electric device 260. The fourth electric device 260 may be connected to the second electric device 220 and the third electric device 240 by means of the fourth bus bar module 160. Thus, the first electric device 200 has been replaced by the fourth electric device 260 in the block of devices 280, see Fig. 14G.

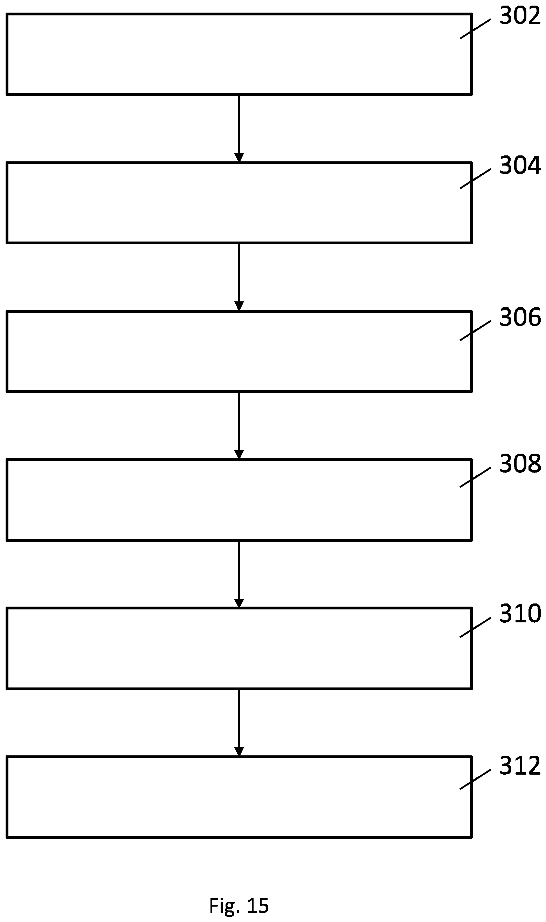

Fig. 15 shows a flow diagram illustrating a method 300 for replacing an electric device 200 in a block of devices 280 according to an embodiment. At 302, a first bus bar module 100 may be unplugged from a first electric device 200 such that the first electric device 200 is disconnected to a second electric device 220 and a third electric device 240, wherein the first electric device 200 is arranged in the middle between the second electric device 220 and the third electric device 240.

At 304, a second bus bar module 120 may be unplugged from the second electric device 220. At 306, the first electric device 200 may be removed from the block of devices 280. At 308, a fourth electric device 260 may be inserted into the block of devices 280. At 310, the second bus bar module 120 may be plugged in the second electric device 220. At 312, the first bus bar module 100 may be plugged in the fourth electric device 260.

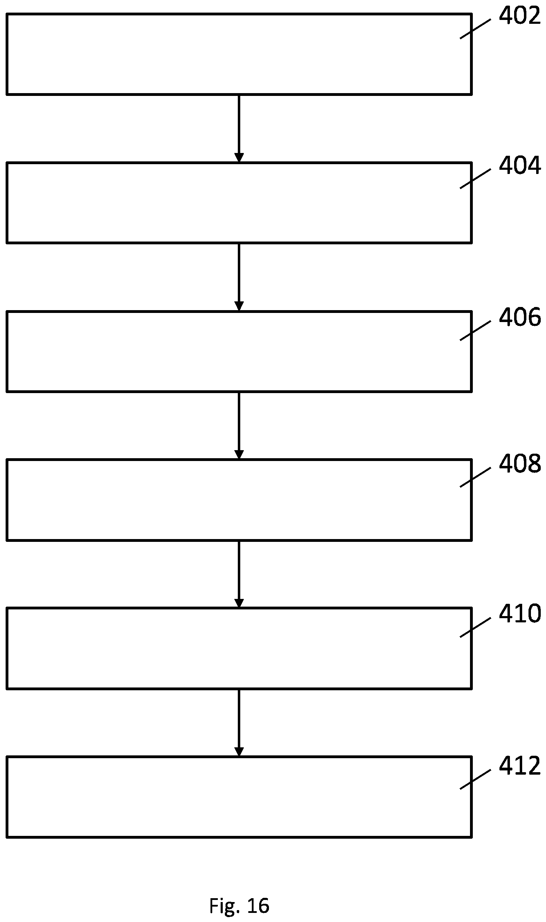

Fig. 16 shows a flow diagram illustrating a further method 400 for replacing an electric device 200 in a block of devices 280 according to a further embodiment. At 402, a second bus bar module 120 of a second electric device 220 may be rotated such that the second electric device 220 may be disconnected to a first electric device 200, wherein the second electric device 220 may be adjacently arranged to the first electric device 200 in the block of devices 280. At 404, a first bus bar module 100 of the first electric device 200 may be rotated such that the first electric device 200 may be disconnected to a third electric device 240, wherein the third electric device 240 may be adjacently arranged to the first electric device 200 in the block of devices 280. At 406, the first electric device 200 may be removed from the block of devices 280. At 408, a fourth electric device 260 including a fourth bus bar module 160 may be inserted into the block of devices 280. At 410, the fourth bus bar module 160 of the fourth electric device 260 may be rotated such that the fourth electric device 260 may be connected to the third electric device 240. At 412, the second bus bar module 120 of the second electric device 220 may be rotated such that the second electric device 220 may be connected to the fourth electric device 260.

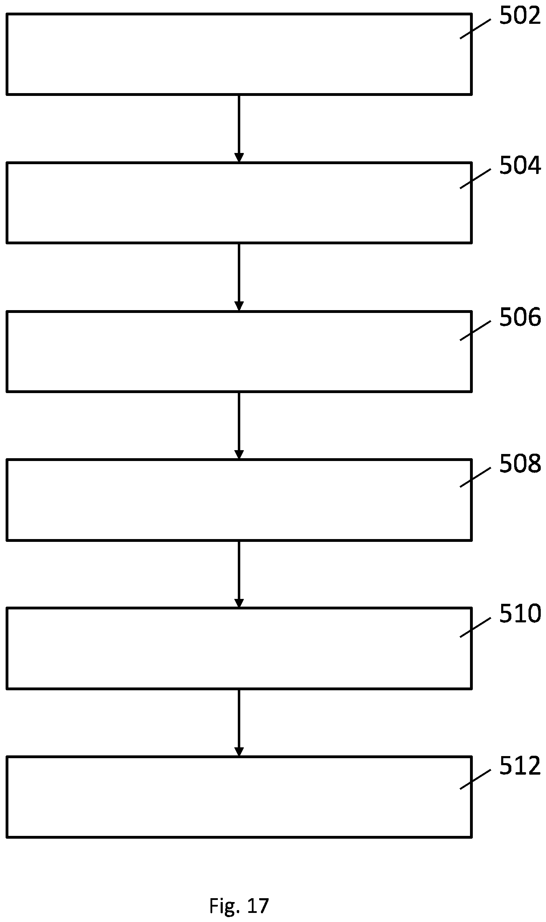

Fig. 17 shows a flow diagram illustrating a further method 500 for replacing an electric device 200 in a block of devices 280 according to a further embodiment. At 502, a second bus bar module 120 of a second electric device 220 may be slid in a direction D such that the second electric device 220 is disconnected from the first electric device 200, wherein the second electric device 220 is adjacently arranged to the first electric device 200 in the block of devices 280. At 504, a first bus bar module 100 of the first electric device 200 may be slid or shifted in the axial direction D such that the first electric device 200 is disconnected from the third electric device 240, wherein the third electric device 240 is adjacently arranged to the first electric device 200 in the block of devices 280. At 506, the first electric device 200 may be removed from the block of devices 280. At 508, a fourth electric device 260 including a fourth bus bar module 160 may be inserted into the block of devices 280. At 510, the fourth bus bar module 160 of the fourth electric device 260 may be slid in an axial direction E such that the fourth electric device 260 is connected to the third electric device 240. At 512, the second bus bar module 120 of the second electric device 220 may be slid in the axial direction E such that the second electric device 220 is connected to the fourth electric device 260.

It is to be understood that the terms first, second, third, fourth, fifth are only for distinguishing different elements and are not limiting the respective feature.

The bus bar module described herein may ensure a decentralised distribution architecture based on a plug-and-play concept. In addition, the bus bar module may allow convenience with varied configurations, modifications as well as upgrades. Also, the bus bar module may ensure effective and reliable electrical distribution for critical applications even in severe environments.

### Reference numeral list

- 100: (first) bus bar module
- 100a: first portion of a bus bar module
- 100b: second portion of a bus bar module
- 101: first end of an insulating element
- 102: second end of an insulating element
- 103: third end of an insulating element
- 104: stud
- 105: contact element
- 106: first terminal of a contact element
- 107: second terminal of a contact element
- 108: third terminal of a contact element
- 109: contact pin of a first terminal
- 110: contact surface of a second terminal
- 111: contact pin of a third terminal
- 112: angle
- 113: sliding rail
- 114: insulating element
- 115: cavity
- 116: first portion of a cavity
- 117: second portion of a cavity
- 118: third portion of a cavity
- 119: plane
- 120: second bus bar module
- 125: contact element
- 126: first terminal of a contact element
- 140: third bus bar module
- 145: contact element
- 147: second terminal of a contact element
- 160: fourth bus bar module
- 170: fifth bus bar module
- 171: front end of an electric device
- 172: upper region of an electric device
- 173: back end of an electric device
- 174: first side end of an electric device
- 175: second side end of an electric device
- 176: receiving element
- 177: top surface of an insulating element
- 178: bottom surface of an insulating element
- 179: area
- 180: mounting plate
- 181: sliding rail
- 182: socket
- 183: port
- 184: port
- 185: fixation plate

- 200: (first) electric device
- 220: second electric device
- 240: third electric device
- 260: fourth electric device
- 270: fifth electric device
- 280: block of devices

- 300: method for replacing an electric device in a block of devices
- 302: step of unplugging a first bus bar module
- 304: step of unplugging a second bus bar module
- 306: step of removing a first electric device
- 308: step of inserting a fourth electric device
- 310: step of plugging the second bus bar module
- 312: step of plugging the first bus bar module

- 400: method for replacing an electric device in a block of devices
- 402: step of rotating a second bus bar module
- 404: step of rotating a first bus bar module
- 406: step of removing a first electric device
- 408: step of inserting a fourth electric device
- 410: step of rotating the fourth bus bar module
- 412: step of rotating the second bus bar module

- 500: method for replacing an electric device in a block of devices
- 502: step of sliding a second bus bar module
- 504: step of sliding a first bus bar module
- 506: step of removing a first electric device
- 508: step of inserting a fourth electric device
- 510: step of sliding the fourth bus bar module
- 512: step of sliding the second bus bar module

- A: rotation axis
- B: axial direction from a first terminal to a second terminal
- C: axial direction
- D: axial direction
- E: axial direction

## Claims

1. A bus bar module (100) for an electric device (200) comprising,
at least two contact elements (105), wherein each of the at least two contact elements (105) comprises a first terminal (106), a second terminal (107), and a third terminal (108) electroconductive connected to each other,
wherein the first terminal (106) is configured for connecting the bus bar module (100) to a third bus bar module (140), the first terminal (106) of the bus bar module (100) is configured to receive a second terminal (147) of a contact element (145) of the third bus bar module (140),
the second terminal (107) is configured for connecting the bus bar module (100) to a second bus bar module (120), the second terminal (107) of the bus bar module (100) is configured to be insertable into a first terminal (126) of a contact element (125) of the second bus bar module (120), and
the third terminal (108) is configured for connecting the bus bar module (100) to the electric device (200); and
an insulating element (114) comprising at least two cavities (115), wherein each of the at least two cavities (115) of the insulating element (114) is designed to accommodate one of the at least two contact elements (105),
wherein the bus bar module (100) is configured to be plugged to the electric device (200).

2. The bus bar module (100) according to claim 1,
wherein the respective first terminal (106), the respective second terminal (107) and the respective third terminal (108) of each contact element (105) are arranged substantially in a plane (119), and
wherein the first terminal (106) and the third terminal (108) are connected to one another at a substantially 90-degree angle (112); and/or wherein the second terminal (107) and the third terminal (108) are connected to one another at a substantially 90-degree angle (112).

3. The bus bar module (100) according to claim 2,
wherein the respective planes (119) are arranged parallel and at a distance from each other.

4. The bus bar module (100) according to any one of claims 1 to 3,
wherein the respective first terminal (106) of each contact element (105) comprises a plurality of first contact pins (109), in particular four first contact pins (109); and or
wherein the respective second terminal (107) of each contact element (105) comprises at least one contact surface (110), and/or
wherein the respective third terminal (108) of each contact element (105) comprises at least one second contact pin (111), in particular two second contact pins (111).

5. The bus bar module (100) according to any one of claims 1 to 4,
wherein each of the at least two cavities (115) of the insulating element (114) comprises a first portion (116), a second portion (117) and a third portion (118), wherein the first portion (116) is configured to receive the first terminal (106) of the contact element (105), the second portion (117) is configured to receive the second terminal (107) of the contact element (105), and the third portion (118) is configured to receive the third terminal (108) of the contact element (105).

6. The bus bar module (100) according to claim 5,
wherein the respective first portion (116) of each cavity (115) is located at a first end (101) of the insulating element (114), the respective second portion (117) of each cavity (115) is located at a second end (102) of the insulation element (114), and the respective third portion (118) of each cavity (115) is located at a third end (103) of the insulating element (114), wherein the first end (101) and the second end (102) are oppositely arranged.

7. The bus bar module (100) according to claim 6,
wherein the insulating element (114) is designed as a comb at the first end (101) of the insulating element (114) and at the second end (102) of the insulating element (114) by means of the first portion (116) of the at least two cavities (115) and the second portion (117) of the at least two cavities (115).

8. The bus bar module (100) according to any one of claims 1 to 7,
wherein the bus bar module (100) comprises four contact elements (105) and the insulating element (114) comprises four cavities (115), wherein two of the four contact elements (105) are configured to distribute high voltage power, in particular DC voltage power with at least 300V, preferably up to 1000V, and the other two of the four contact elements (105) are configured to distribute low voltage power, in particular 24V, preferably up to 120V.

9. The bus bar module (100) according to any one of claims 1 to 8,
wherein the bus bar module (100) comprises a rotation axis (A) preferably designed by means of a stud (104) extruding from the insulating element (114),
wherein the bus bar module (100) is configured to be rotatably connected to the electric device (200) by means of the stud (104).

10. The bus bar module (100) according to claim 9,
wherein the rotation axis (A) is arranged in an area of the second terminals (107) of the at least two contact elements (105) and the rotation axis (A) is arranged perpendicular to the second terminals (107); and
wherein the bus bar module (100) is configured to be rotatable about the rotation axis (A) such that the respective first terminals (106) of the at least two contact elements (105) are disconnected to an adjacently arranged electric device, and the respective third terminals (108) of the at least two contact elements (105) are disconnected to the electric device (200) if the bus bar module (100) is rotated by substantially 90-degrees around the rotation axis (A).

11. The bus bar module (100) according to any one of claims 1 to 8,
wherein the bus bar module (100) comprises at least one sliding rail (113) extruding from the insulating element (114) in a same direction as the third terminals (108) of the at least two contact elements (105),
wherein the bus bar module (100) is configured to be slidably connected to the electric device (100) in an axial direction (D) from the first terminal (106) to the second terminal (107) of each of the at least two contact elements (105) by means of the at least one sliding rail (113).

12. A method (300) for replacing an electric device (200) in a block of devices (280) using a bus bar module (100) according to any one of claims 1 to 8 comprising,
- unplugging (302) a first bus bar module (100) from a first electric device (200) such that the first electric device (200) is disconnected to a second electric device (220) and a third electric device (240), wherein the first electric device (200) is arranged in the middle between the second electric device (220) and the third electric device (240);
- unplugging (304) a second bus bar module (120) from the second electric device (220);
- removing (306) the first electric device (200) from the block of devices (280);
- inserting (308) a fourth electric device (260) into the block of devices (280);
- plugging (310) the second bus bar module (120) in the second electric device (220); and
- plugging (312) the first bus bar module (100) in the fourth electric device (260),
wherein the first bus bar module (100) connects the fourth electric device (260) to the second electric device (220) and to the third electric device (240) in the block of devices (280).

13. A method (400) for replacing an electric device (200) in a block of devices (280) using a bus bar module (100) according to any one of claims 1 to 10 comprising,
- rotating (402) a second bus bar module (120) of a second electric device (220) such that the second electric device (220) is disconnected from a first electric device (200), wherein the second electric device (220) is adjacently arranged to the first electric device (200) in the block of devices (280);
- rotating (404) a first bus bar module (100) of the first electric device (200) such that the first electric device (200) is disconnected from a third electric device (240), wherein the third electric device (240) is adjacently arranged to the first electric device (200) in the block of devices (280);
- removing (406) the first electric device (200) from the block of devices (280);
- inserting (408) a fourth electric device (260) comprising a fourth bus bar module (160) into the block of devices (280);
- rotating (410) the fourth bus bar module (160) of the fourth electric device (260) such that the fourth electric device (260) is connected to the third electric device (240); and
- rotating (412) the second bus bar module (120) of the second electric device (220) such that the second electric device (220) is connected to the fourth electric device (260),
wherein the fourth bus bar module (160) connects the fourth electric device (260) to the second electric device (220) and to the third electric device (240) in the block of devices (280).

14. A method (500) for replacing an electric device (200) in a block of devices (280) using a bus bar module (100) according to any one of claims 1 to 8 and 11 comprising,
- sliding (502) a second bus bar module (120) of a second electric device (220) in an axial direction (D) such that that the second electric device (220) is disconnected from the first electric device (200), wherein the second electric device (220) is adjacently arranged to the first electric device (200) in the block of devices (280);
- sliding (504) a first bus bar module (100) of the first electric device (200) in the axial direction (D) such that such that the first electric device (200) is disconnected from the third electric device (240), wherein the third electric device (240) is adjacently arranged to the first electric device (200) in the block of devices (280);
- removing (506) the first electric device (200) from the block of devices (280);
- inserting (508) a fourth electric device (260) comprising a fourth bus bar module (160) into the block of devices (280);
- sliding (510) the fourth bus bar module (160) of the fourth electric device (260) in an axial direction (E) such the fourth electric device (260) is connected to the third electric device (240); and
- sliding (512) the second bus bar module (120) of the second electric device (220) in the axial direction (E) such that the second electric device (220) is connected to the fourth electric device (260), wherein the fourth bus bar module (160) connects the fourth electric device (260) to the second electric device (220) and to the third electric device (240) in the block of devices (280).

15. A system comprising a plurality of bus bar modules (100) in accordance with at least one of claims 1 to 11 which are electrically coupled, wherein at least some of the bus bar modules are electrically coupled with electric devices.

## Amended claims

### Amended claims in accordance with Rule 137(2) EPC.

1. A bus bar module (100) for an electric device (200) comprising,
at least two contact elements (105), wherein each of the at least two contact elements (105) comprises a first terminal (106), a second terminal (107), and a third terminal (108) electroconductively connected to each other,
wherein the first terminal (106) is configured for connecting the bus bar module (100) to a third bus bar module (140), the first terminal (106) of the bus bar module (100) is configured to receive a second terminal (147) of a contact element (145) of the third bus bar module (140),
the second terminal (107) is configured for connecting the bus bar module (100) to a second bus bar module (120), the second terminal (107) of the bus bar module (100) is configured to be insertable into a first terminal (126) of a contact element (125) of the second bus bar module (120), and
the third terminal (108) is configured for connecting the bus bar module (100) to the electric device (200); and
an insulating element (114) comprising at least two cavities (115), wherein each of the at least two cavities (115) of the insulating element (114) is designed to accommodate one of the at least two contact elements (105),
wherein the bus bar module (100) is configured to be plugged to the electric device (200), and
wherein the bus bar module (100) is arranged at a front end of the electric device (200) and in an upper region of the electric device (200).

2. The bus bar module (100) according to claim 1,
wherein the respective first terminal (106), the respective second terminal (107) and the respective third terminal (108) of each contact element (105) are arranged substantially in a plane (119), and
wherein the first terminal (106) and the third terminal (108) are connected to one another at a substantially 90-degree angle (112); and/or
wherein the second terminal (107) and the third terminal (108) are connected to one another at a substantially 90-degree angle (112).

3. The bus bar module (100) according to claim 2,
wherein the respective planes (119) are arranged parallel and at a distance from each other.

4. The bus bar module (100) according to any one of claims 1 to 3,
wherein the respective first terminal (106) of each contact element (105) comprises a plurality of first contact pins (109), in particular four first contact pins (109); and or
wherein the respective second terminal (107) of each contact element (105) comprises at least one contact surface (110), and/or
wherein the respective third terminal (108) of each contact element (105) comprises at least one second contact pin (111), in particular two second contact pins (111).

5. The bus bar module (100) according to any one of claims 1 to 4,
wherein each of the at least two cavities (115) of the insulating element (114) comprises a first portion (116), a second portion (117) and a third portion (118), wherein the first portion (116) is configured to receive the first terminal (106) of the contact element (105), the second portion (117) is configured to receive the second terminal (107) of the contact element (105), and the third portion (118) is configured to receive the third terminal (108) of the contact element (105).

6. The bus bar module (100) according to claim 5,
wherein the respective first portion (116) of each cavity (115) is located at a first end (101) of the insulating element (114), the respective second portion (117) of each cavity (115) is located at a second end (102) of the insulation element (114), and the respective third portion (118) of each cavity (115) is located at a third end (103) of the insulating element (114), wherein the first end (101) and the second end (102) are oppositely arranged.

7. The bus bar module (100) according to claim 6,
wherein the insulating element (114) is designed as a comb at the first end (101) of the insulating element (114) and at the second end (102) of the insulating element (114) by means of the first portion (116) of the at least two cavities (115) and the second portion (117) of the at least two cavities (115).

8. The bus bar module (100) according to any one of claims 1 to 7,
wherein the bus bar module (100) comprises four contact elements (105) and the insulating element (114) comprises four cavities (115), wherein two of the four contact elements (105) are configured to distribute high voltage power, in particular DC voltage power with at least 300V, preferably up to 1000V, and the other two of the four contact elements (105) are configured to distribute low voltage power, in particular 24V, preferably up to 120V.

9. The bus bar module (100) according to any one of claims 1 to 8,
wherein the bus bar module (100) comprises a rotation axis (A) preferably designed by means of a stud (104) extruding from the insulating element (114),
wherein the bus bar module (100) is configured to be rotatably connected to the electric device (200) by means of the stud (104).

10. The bus bar module (100) according to claim 9,
wherein the rotation axis (A) is arranged in an area of the second terminals (107) of the at least two contact elements (105) and the rotation axis (A) is arranged perpendicular to the second terminals (107); and
wherein the bus bar module (100) is configured to be rotatable about the rotation axis (A) such that the respective first terminals (106) of the at least two contact elements (105) are disconnected to an adjacently arranged electric device, and the respective third terminals (108) of the at least two contact elements (105) are disconnected to the electric device (200) if the bus bar module (100) is rotated by substantially 90-degrees around the rotation axis (A).

11. The bus bar module (100) according to any one of claims 1 to 8,
wherein the bus bar module (100) comprises at least one sliding rail (113) extruding from the insulating element (114) in a same direction as the third terminals (108) of the at least two contact elements (105),
wherein the bus bar module (100) is configured to be slidably connected to the electric device (100) in an axial direction (D) from the first terminal (106) to the second terminal (107) of each of the at least two contact elements (105) by means of the at least one sliding rail (113).

12. A method (300) for replacing an electric device (200) in a block of devices (280) using a bus bar module (100) according to any one of claims 1 to 8 comprising,
- unplugging (302) a first bus bar module (100) from a first electric device (200) such that the first electric device (200) is disconnected to a second electric device (220) and a third electric device (240), wherein the first electric device (200) is arranged in the middle between the second electric device (220) and the third electric device (240);
- unplugging (304) a second bus bar module (120) from the second electric device (220);
- removing (306) the first electric device (200) from the block of devices (280);
- inserting (308) a fourth electric device (260) into the block of devices (280);
- plugging (310) the second bus bar module (120) in the second electric device (220); and
- plugging (312) the first bus bar module (100) in the fourth electric device (260),
wherein the first bus bar module (100) connects the fourth electric device (260) to the second electric device (220) and to the third electric device (240) in the block of devices (280).

13. A method (400) for replacing an electric device (200) in a block of devices (280) using a bus bar module (100) according to any one of claims 1 to 10 comprising,
- rotating (402) a second bus bar module (120) of a second electric device (220) such that the second electric device (220) is disconnected from a first electric device (200), wherein the second electric device (220) is adjacently arranged to the first electric device (200) in the block of devices (280);
- rotating (404) a first bus bar module (100) of the first electric device (200) such that the first electric device (200) is disconnected from a third electric device (240), wherein the third electric device (240) is adjacently arranged to the first electric device (200) in the block of devices (280);
- removing (406) the first electric device (200) from the block of devices (280);
- inserting (408) a fourth electric device (260) comprising a fourth bus bar module (160) into the block of devices (280);
- rotating (410) the fourth bus bar module (160) of the fourth electric device (260) such that the fourth electric device (260) is connected to the third electric device (240); and
- rotating (412) the second bus bar module (120) of the second electric device (220) such that the second electric device (220) is connected to the fourth electric device (260),
wherein the fourth bus bar module (160) connects the fourth electric device (260) to the second electric device (220) and to the third electric device (240) in the block of devices (280).

14. A method (500) for replacing an electric device (200) in a block of devices (280) using a bus bar module (100) according to any one of claims 1 to 8 and 11 comprising,
- sliding (502) a second bus bar module (120) of a second electric device (220) in an axial direction (D) such that that the second electric device (220) is disconnected from the first electric device (200), wherein the second electric device (220) is adjacently arranged to the first electric device (200) in the block of devices (280);
- sliding (504) a first bus bar module (100) of the first electric device (200) in the axial direction (D) such that such that the first electric device (200) is disconnected from the third electric device (240), wherein the third electric device (240) is adjacently arranged to the first electric device (200) in the block of devices (280);
- removing (506) the first electric device (200) from the block of devices (280);
- inserting (508) a fourth electric device (260) comprising a fourth bus bar module (160) into the block of devices (280);
- sliding (510) the fourth bus bar module (160) of the fourth electric device (260) in an axial direction (E) such the fourth electric device (260) is connected to the third electric device (240); and
- sliding (512) the second bus bar module (120) of the second electric device (220) in the axial direction (E) such that the second electric device (220) is connected to the fourth electric device (260),
wherein the fourth bus bar module (160) connects the fourth electric device (260) to the second electric device (220) and to the third electric device (240) in the block of devices (280).

15. A system comprising a plurality of bus bar modules (100) in accordance with at least one of claims 1 to 11 which are electrically coupled, wherein at least some of the bus bar modules are electrically coupled with electric devices.
